# EUROPEAN PATENT APPLICATION

(11) **EP 4 578 525 A1**
(43) Date of publication of application: **02.07.2025**
(21) Application number: 24221021.9
(22) Date of filing: 18.12.2024
(51) Int. Cl.: A63F 13/87, G06F 3/01

(54) **VIRTUAL REALITY COMMUNICATION ECOSYSTEM WITH PERSONA-IDENTIFIABLE VIRTUAL DIRECTORY NUMBERS**

(30) Priority: 28.12.2023 US 202318399576
(71) Applicant: Mitel Networks Corporation, Ottawa, Ontario K2K 3K1 (CA)
(72) Inventor: Murthy, Tejas, 560078 Bangalore (IN); Naidoo, Logendra, Ottawa, K1S 0W8 (CA)
(74) Representative: McDougall, James

(57) **Abstract**

A virtual reality (VR) system and method to manage communications in one or more metaverses can include (1) one or more VR servers configured to create multiple virtual spaces in one or more metaverses; (2) an avatar library in communication with each of the one or more VR servers; (3) a virtual communication server in communication with the one or more VR servers and configured to communicate with a plurality of user operating devices. The one or more servers is configured to receive a first avatar request, generate a first avatar for a first user within the one or more metaverses based upon the first avatar request, assign a first virtual directory number to the first avatar, apply a first set of communication rules for the first avatar, and manage communication notifications for the first avatar within the one or more metaverses based on the first set of communication rules.

## Description

### FIELD

This disclosure relates to multi-user virtual reality systems. More particularly, the disclosure relates to methods and systems for handling communications between and amongst avatars in a virtual universe.

### BACKGROUND

The subject matter discussed in the background section should not be assumed to be prior art merely as a result of its mention in the background section. Similarly, a problem mentioned in the background section or associated with the subject matter of the background section should not be assumed to have been previously recognized in the prior art. The subject matter in the background section merely represents different approaches, which in and of themselves may be inventions.

A Virtual Universe (VU), sometimes referred to as a metaverse or a virtual world, is a computer-based simulated environment intended for its user to traverse, inhabit, and interact through the use of avatars. Users can create avatars and virtually interact with others from essentially any location using devices such as a 3D screen, a virtual reality (VR) headset, a mobile phone, or a personal computer (PC). Many VUs are represented using 3D graphics and landscapes and are populated by many thousands of users by way of avatars. Often, the VU resembles the real world such as in terms of physics, buildings, and landscapes.

It should not be assumed that the utility of VUs is limited to game playing, although that is certainly seen to be useful and valuable insofar as it has become a real economic reality with real dollars being exchanged. However, the usefulness of VUs also includes the opportunity to run corporate conferences and seminars. It is also used to conduct virtual world classroom sessions. Governmental and instructional opportunities abound in the virtual world. Accordingly, it should be fully appreciated that the term "virtual" as applied to this technology does not in any way make it less real or less valuable than the "real" world. It is really an extension of current reality. Moreover, it is an extension that greatly facilitates human communication and interaction in a non-face-to-face fashion.

In a virtual world, private communications can be difficult to ensure. Within a virtual world, each avatar may be associated with or used to identify a certain natural person. This means that even though the VU is virtual, the virtual communications can be sent or received by a natural person. Not only can communications be seen by a natural person (e.g., using a screen, headset, etc.), but a third party person or avatar may be able to "virtually" view a user's communications within the virtual world (e.g., by seeing one avatar speak to another through their visual or audio mannerisms, or by viewing an avatar's virtual communication device (e.g., a computer generated phone, computer, status, or the like) that is viewable within the virtual world).

### SUMMARY

A first aspect of this disclosure provides a method for virtual reality (VR) communication, comprising: creating, via one or more processors, multiple virtual spaces within one or more metaverses; generating, via the one or more processors, an avatar-specific interface within the one or more metaverses; generating, via the one or more processors, a list of reachability options; responsive to receiving a selection from the list of reachability options, applying, via the one or more processors, a set of communication rules for a first avatar; and managing, via the one or more processors, connectivity with the first avatar across virtual and real-world environments based upon the selection from the list of reachability options.

The avatar-specific interface may comprise at least one of an engageable interface whereby the list of reachability options is selected and a likeness of the first avatar.

The set of communication rules may define which avatars block incoming notifications.

The set of communication rules may designate one or more virtual spaces of the multiple virtual spaces within the one or more metaverses that allow the first avatar to receive incoming notifications.

The set of communication rules may define a first plurality of users that can contact the first avatar and the set of communication rules may define a second plurality of users that can contact a second avatar.

Managing connectivity with the first avatar may include blocking an incoming notification for the first avatar of a first user and allowing the incoming notification for a second avatar of the first user.

A second aspect of this disclosure provides virtual reality system comprising: one or more virtual reality (VR) servers configured to create multiple virtual spaces within one or more metaverses; a virtual communication server in communication with the one or more VR servers and configured to communicate with a plurality of user devices; an avatar library in communication with each of the one or more VR servers and the virtual communication server, wherein the avatar library comprises a plurality of avatars, wherein at least one of the one or more VR servers and the virtual communication server is configured to: receive a first avatar request; generate a first avatar for a first user within the one or more metaverses based upon the first avatar request; assign a first virtual directory number to the first avatar; apply a first set of communication rules for the first avatar; and manage communication notifications for the first avatar within the one or more metaverses based on the first set of communication rules.

The first avatar request may be received from the first user.

The first avatar request may be generated in response to the first user entering a first metaverse of the one or more metaverses.

Managing communication notifications for the first avatar within the one or more metaverses based on the first set of communication rules may include blocking a second user within the one or more metaverses from viewing a communication between the first user and a third user.

The at least one of the one or more VR servers and the virtual communication server may be further configured to: receive a second avatar request; generate a second avatar for the first user within the one or more metaverses based upon the second avatar request, the second avatar is different from the first avatar; assign a second virtual directory number to the second avatar; apply a second set of communication rules for the second avatar; and manage communication notifications for the second avatar within the one or more metaverses based on the second set of communication rules.

The second virtual directory number is different from the first virtual directory number.

The first set of communication rules may be associated with a first virtual space within the one or more metaverses and the second set of communication rules may be associated with a second virtual space within the one or more metaverses.

The first virtual directory number may be associated with a first virtual space within the one or more metaverses, and the managing communication notifications for the first avatar within the one or more metaverses based on the first set of communication rules may include blocking an incoming notification when the first avatar is outside of the first virtual space.

The managing communication notifications for the first avatar within the one or more metaverses based on the first set of communication rules may include blocking an incoming notification for the first avatar of the first user and allowing the incoming notification for a second avatar of the first user.

A third aspect of this disclosure provides a method for screening a communication within one or more metaverses, wherein the one or more metaverses includes multiple virtual spaces, wherein each of the multiple virtual spaces is configured to permit a plurality of avatars to simultaneously interact with each other inside of at least one of the multiple virtual spaces, the method comprising steps of: using at least one of one or more virtual reality (VR) servers, a virtual communication server, or one or more user operating devices, to create the multiple virtual spaces within the one or more metaverses; receiving a first avatar request; generating a first avatar for a first user within the one or more metaverses based upon the first avatar request; assigning a first virtual directory number to the first avatar; applying a first set of communication rules for the first avatar; and managing communication notifications for the first avatar within the one or more metaverses based on the first set of communication rules.

The first set of communication rules may define a plurality of avatars from which to block incoming notifications.

The first set of communication rules may designate one or more virtual spaces of the multiple virtual spaces within the one or more metaverses that allow the first avatar to receive incoming notifications.

The method of the third aspect may further comprise the step of blocking an incoming communication from a second user in response to at least one of: (i) the first avatar being located in a first virtual space; or (ii) the first user operating as the first avatar.

The method of the third aspect may further comprise the step of displaying the incoming communication from the second user in response to at least one of: (i) the first avatar being located in a second virtual space; or (ii) the first user operating as a second avatar.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the following detailed description and claims in connection with the following drawings. While the drawings illustrate various embodiments employing the principles described herein, the drawings do not limit the scope of the claims.
FIG. 1A illustrates a schematic view of a virtual reality system, in accordance with various embodiments.
FIG. 1B illustrates a schematic view of interactions between devices and one or more servers of the virtual reality system, in accordance with various embodiments.
FIG. 2 illustrates a process performed by the virtual reality system of FIG. 1A, in accordance with various embodiments.
FIG. 3 illustrates a graphical user interface on a user device during the process of FIG. 2, in accordance with various embodiments.
FIG. 4 illustrates a graphical user interface on a user device during the process of FIG. 2, in accordance with various embodiments.
FIG. 5A illustrates a graphical user interface on a user device during the process of FIG. 2, in accordance with various embodiments.
FIG. 5B illustrates a graphical user interface on a user device during the process of FIG. 2, in accordance with various embodiments.
FIG. 6 illustrates a process performed by the virtual reality system of FIG. 1A, in accordance with various embodiments.
FIG. 7 illustrates a process performed by the virtual reality system of FIG. 1A, in accordance with various embodiments.
FIG. 8A and FIG. 8B illustrate example virtual notifications, in accordance with various embodiments.
FIG. 9 illustrates an example engageable interface, in accordance with various embodiments.

### DETAILED DESCRIPTION

The following detailed description of various embodiments herein refers to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

Terms and phrases similar to "associate" and/or "associating" may include tagging, flagging, correlating, using a look-up table or any other method or system for indicating or creating a relationship between elements, such as, for example, (i) a presentation account and (ii) an item (e.g., a research article, a written speech, notes on the planned speech, or the like). Moreover, the associating may occur at any point, in response to any suitable action, event, or period of time. The associating may occur at predetermined intervals, periodically, randomly, once, more than once, or in response to a suitable request or action. Any of the information may be distributed and/or accessed via a software enabled link, wherein the link may be sent via an email, text, post, social network input, and/or any other method.

The process flows and screenshots depicted are merely embodiments and, unless otherwise noted, are not intended to limit the scope of the disclosure. For example, the steps recited in any of the method or process descriptions may be executed in any order and are not limited to the order presented. It will be appreciated that the following description makes appropriate references not only to the steps and user interface elements, but also to the various system components as described herein. It should be understood that, although exemplary embodiments are illustrated in the figures and described herein, the principles of the present disclosure may be implemented using any number of techniques, whether currently known or not. The present disclosure should in no way be limited to the exemplary implementations and techniques illustrated in the drawings and described below. Unless otherwise specifically noted, articles depicted in the drawings are not necessarily drawn to scale.

Computer programs (also referred to as computer control logic) can be stored in main memory and/or secondary memory. Computer programs may also be received via communications interface. Such computer programs, when executed, enable the computer system to perform the features as discussed herein. In particular, the computer programs, when executed, enable the processor to perform the features of various embodiments. Accordingly, such computer programs represent controllers of the computer system.

These computer program instructions may be loaded onto a general-purpose computer, special purpose computer, or other programmable data processing apparatus to produce a machine, such that the instructions that execute on the computer or other programmable data processing apparatus create means for implementing the functions specified in the flowchart block or blocks. These computer program instructions may also be stored in a computer-readable memory that can direct a computer or other programmable data processing apparatus to function in a particular manner, such that the instructions stored in the computer-readable memory produce an article of manufacture including instruction means which implement the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions specified in the flowchart block or blocks.

In various embodiments, software may be stored in a computer program product and loaded into a computer system using a removable storage drive, hard disk drive, or communications interface. The control logic (software), when executed by the processor, causes the processor to perform the functions of various embodiments as described herein. In various embodiments, hardware components may take the form of application specific integrated circuits (ASICs). Implementation of the hardware so as to perform the functions described herein will be apparent to persons skilled in the relevant art(s).

As will be appreciated by one of ordinary skill in the art, the system disclosed herein may be embodied as a customization of an existing system, an add-on product, a processing apparatus executing upgraded software, a stand-alone system, a distributed system, a method, a data processing system, a device for data processing, and/or a computer program product. Accordingly, any portion of the system or a module may take the form of a processing apparatus executing code, an internet-based embodiment, an entirely hardware-based embodiment, or an embodiment combining aspects of the internet, software, and hardware. Furthermore, the system may take the form of a computer program product on a computer-readable storage medium having computer-readable program code means embodied in the storage medium. Any suitable computer-readable storage medium may be utilized, including hard disks, optical storage devices, magnetic storage devices, and/or the like.

The system and method may be described herein in terms of functional block components, screen shots, optional selections, and various processing steps. It should be appreciated that such functional blocks may be realized by any number of hardware and/or software components configured to perform the specified functions. For example, the system may employ various integrated circuit components, e.g., memory elements, processing elements, logic elements, look-up tables, and the like, which may carry out a variety of functions under the control of one or more microprocessors or other control devices. Similarly, the software elements of the system may be implemented with any programming or scripting language such as C, C++, C#, JAVA^{®}, JAVASCRIPT^{®}, JAVASCRIPT^{®} Object Notation (JSON), VBScript, Macromedia COLD FUSION, COBOL, MICROSOFT^{®} company's Active Server Pages, assembly, PERL^{®}, PHP, awk, PYTHON^{®}, Visual Basic, SQL Stored Procedures, PL/SQL, any UNIX^{®} shell script, and extensible markup language (XML) with the various algorithms being implemented with any combination of data structures, objects, processes, routines or other programming elements. Further, it should be noted that the system may employ any number of techniques for data transmission, signaling, data processing, network control, and the like. Still further, the system could be used to detect or prevent security issues with a client-side scripting language, such as JAVASCRIPT^{®}, VBScript, or the like.

The system and method are described herein with reference to exemplary GUIs, block diagrams and flowchart illustrations of methods, apparatus, and computer program products according to various embodiments. It will be understood that each functional block of the block diagrams and the flowchart illustrations, and combinations of functional blocks in the block diagrams and flowchart illustrations, respectively, can be implemented by computer program instructions.

In various embodiments, the software elements of the system may also be implemented using a JAVASCRIPT^{®} run-time environment configured to execute JAVASCRIPT^{®} code outside of a web browser. For example, the software elements of the system may also be implemented using NODE.JS^{®} components. NODE.JS^{®} programs may implement several modules to handle various core functionalities. For example, a package management module, such as NPM^{®}, may be implemented as an open-source library to aid in organizing the installation and management of third-party NODE.JS^{®} programs. NODE.JS^{®} programs may also implement a process manager, such as, for example, Parallel Multithreaded Machine ("PM2"); a resource and performance monitoring tool, such as, for example, Node Application Metrics ("appmetrics"); a library module for building user interfaces, and/or any other suitable and/or desired module.

The computers discussed herein may provide a suitable website or other internet-based graphical user interface which is accessible by users. In one embodiment, MICROSOFT^{®} company's Internet Information Services (IIS), Transaction Server (MTS) service, and an SQL SERVER^{®} database, are used in conjunction with MICROSOFT^{®} operating systems, WINDOWS NT^{®} web server software, SQL SERVER^{®} database, and MICROSOFT^{®} Communication server. Additionally, components such as ACCESS^{®} software, SQL SERVER^{®} database, ORACLE^{®} software, SYBASE^{®} software, INFORMIX^{®} software, MYSQL^{®} software, INTERBASE^{®} software, etc., may be used to provide an Active Data Object (ADO) compliant database management system. In one embodiment, the APACHE^{®} web server is used in conjunction with a LINUX^{®} operating system, a MYSQL^{®} database, and PERL^{®}, PHP, Ruby, and/or PYTHON^{®} programming languages.

For the sake of brevity, data networking, application development, and other functional aspects of the systems (and components of the individual operating components of the systems) may not be described in detail herein. Furthermore, the connecting lines shown in the various figures contained herein are intended to represent exemplary functional relationships and/or physical couplings between the various elements. It should be noted that many alternative or additional functional relationships or physical connections may be present in a practical system.

In various embodiments, the methods described herein are implemented using the various particular machines described herein. The methods described herein may be implemented using the below particular machines, and those hereinafter developed, in any suitable combination, as would be appreciated immediately by one skilled in the art. Further, as is unambiguous from this disclosure, the methods described herein may result in various transformations of certain articles.

The various system components discussed herein may include one or more of the following: a host server or other computing systems including a processor for processing digital data; a memory coupled to the processor for storing digital data; an input digitizer coupled to the processor for inputting digital data; an application program stored in the memory and accessible by the processor for directing processing of digital data by the processor; a display device coupled to the processor and memory for displaying information derived from digital data processed by the processor; and a plurality of databases. As those skilled in the art will appreciate, a user computer may include an operating system (e.g., WINDOWS^{®}, UNIX^{®}, LINUX^{®}, SOLARIS^{®}, MACOS^{®}, etc.) as well as various support software and drivers typically associated with computers.

In various embodiments, the embodiments are directed toward one or more computer systems capable of carrying out the functionalities described herein. The computer system includes one or more processors. The processor is connected to a communication infrastructure (e.g., a communications bus, cross-over bar, network, or the like.). Various software embodiments are described in terms of this exemplary computer system. After reading this description, it will become apparent to a person skilled in the relevant art(s) how to implement various embodiments using other computer systems and/or architectures. The computer system can include a display interface that forwards graphics, text, and other data from the communication infrastructure (or from a frame buffer not shown) for display on a display unit.

The computer system also includes a main memory, such as random-access memory (RAM), and may also include a secondary memory. The secondary memory may include, for example, a hard disk drive, a solid-state drive, and/or a removable storage drive. The removable storage drive reads from and/or writes to a removable storage unit. As will be appreciated, the removable storage unit includes a computer usable storage medium having stored therein computer software and/or data.

In various embodiments, secondary memory may include other similar devices for allowing computer programs or other instructions to be loaded into a computer system. Such devices may include, for example, a removable storage unit and an interface. Examples of such may include a program cartridge and cartridge interface (such as that found in video game devices), a removable memory chip (such as an erasable programmable read only memory (EPROM), programmable read only memory (PROM), or the like) and associated socket, or other removable storage units and interfaces, which allow software and data to be transferred from the removable storage unit to a computer system.

The terms "computer program medium," "computer usable medium," and "computer-readable medium" are used to generally refer to media such as a removable storage drive and a hard disk installed in a hard disk drive. These computer program products provide software to a computer system.

An "avatar," as referred to herein is a virtual figure configured to represent a user in the metaverse. In this regard, an "avatar" refers to a virtual figure that is user controlled (e.g., through a user device such as a virtual reality headset, virtual reality goggles, or any other method of control), in accordance with various embodiments.

Disclosed herein are systems and methods for communication between and amongst avatars in and throughout one or more metaverses. Traditional wired and wireless telecommunication methods are often limited and lack the immersive, interactive experience that virtual users demand. Current virtual reality platforms primarily focus on gaming and social interaction, missing the opportunity to integrate various communication functionalities. The disconnect between these two domains limits user engagement and the practical utility of virtual spaces for professional and personal communication. By merging traditional telecommunication tools with virtual reality capabilities, aspects of the present disclosure aim to create a unified, immersive communication experience that is both functional and engaging.

Furthermore, traditional telecom methods and existing virtual reality platforms operate in isolated domains, creating a fragmented user experience and limiting practical utility. While directory numbers and digital IDs are prevalent in real-world communication systems, they are largely absent in virtual spaces. This creates a gap for seamless interactions across both realms.

In various embodiments, aspects of the present disclosure integrate traditional telecommunication utilities with virtual reality. Virtual reality-specific directory numbers can be utilized to create a unified, immersive communication platform that extends the concept of directory numbers into the virtual world, enhancing both personal and professional interactions.

A gray area with the advent of virtual reality is being able to associate virtual avatars or profiles with different personas such as the gamer, the business professional, etc. ultimately identifying what sort of communications (a) constitute a virtual-reality contact, and (b) how to be reached when in the virtual reality space.

It is likely that there will be a desire for unique identifiers in virtual realms that are enhancements to the traditional directory numbers. A good example of this is that reaching a person at a desk phone (location specific) or a smartphone (location agnostic) assumes that the person must be near the device physically. People operate and live in physical spaces; therefore, they need to be in close proximity to their phones to be reached. In virtual reality, however, people may inhabit multiple virtual spaces and even virtual roles simultaneously. However, virtual reality ensures the inhabitants will always be based on the likeness of the real-world counterpart: avatars. This makes the need for real-world, location-specific identifiers archaic. Instead, aspects of the present disclosure provide a unique identifier that is context and even persona-aware (e.g., envision avatars and virtual occupations). Seamless communication is the crux of an efficient business. Aspects of the present disclosure enables users to be reached more effectively in the virtual realm. The present disclosure respects the dynamic, growing nature of virtual engagements. This includes professional meetings, gaming, or socializing, without the need to be physically near any specific device.

In various embodiments, a virtual reality communication system utilizes a virtual directory number. The virtual directory number seeks to address various aspects of communication in virtual environments, emphasizing the central role of personas and their reachability.

Virtual directory numbers serve as the digital designations that direct communication to the appropriate virtual space or persona. In the virtual realm, your persona becomes your communication hub, and the virtual directory number connects to the persona, not the person, in accordance with various embodiments.

Aspects of the present disclosure transforms the way individuals connect with others in virtual reality, ensuring effortless reachability regardless of virtual location or real-world activities. The virtual reality communication system can intelligently manage notifications, ensuring constant connectivity with the right personas so that a user isn't reachable if their "multiverse" of personas is burdened with real-world intrusions.

Aspects of the present disclosure utilize persona-driven rules. Regardless of whether immersed in a virtual reality game, participating in a work meeting, or enjoying social interactions in the metaverse, users possess the authority to define rules governing which personas can establish contact and under what circumstances. This ensures that communication aligns seamlessly with the context of the engagement.

The present disclosure aims to create a versatile virtual-reality apparatus that prioritizes personas and their reachability, recognizing that avatars are manifestations in the metaverse. By focusing on persona-centric communication, seamless reachability, and customizable rule sets, aspects of the present disclosure are ushering in a new era of virtual reality communication, allowing users to manage and prioritize their interactions tailored to their specific needs.

Aspects of the present disclosure is poised to advance communication within virtual reality environments by focusing on three essential pillars: persona-centric communication, seamless reachability, and customizable rule sets.

**Persona-Centric Communication:** This visionary concept places a central focus on persona-centric virtual reality communication. In this paradigm, the persona/avatar takes the lead as the primary conduit for virtual interactions. Imagine a user's persona/avatar as a dynamic, central figure within the virtual reality world, representing the user's identity, interests, and engagements.

**Persona-Driven Rule Sets:** To enhance reachability, the system provides users with customizable rule sets. These rules enable fine-tuning of reachability settings according to current activities and preferences. For example, in the midst of a game or during a work meeting, specific personas can be designated for contact, ensuring that virtual reality communication seamlessly aligns with the context of the engagement.

**Seamless Reachability and Notifications:** The system can be designed to maintain connectivity and accessibility, regardless of one's location within virtual or real-world environments. Notifications, acting as guiding beacons, accompany individuals throughout their journey in the metaverse. Whether users are immersed in a gaming experience or engrossed in a work meeting, the system ensures continuous communication with the appropriate personas and contexts.

In various embodiments, the present disclosure provides systems and methods derived from the interplay of virtual directory numbers and context-aware notifications. In various embodiments, the present disclosure integrates the virtual reality platform (spaces and avatars), communication methods (persona to persona; real-world to persona), and adaptable reachability rules collectively creating a virtual reality communication framework.

Although described herein in various aspects as communication within the one or more metaverses between avatar's (and their respective users), the present disclosure is not limited in this regard. For example, if a user has a non-metaverse contact (e.g., a phone number, an email address, or the like) registered with an account associated with an avatar of the user, the system can be configured to transmit a message through the non-metaverse contact. In this regard, a user can communicate across platforms (e.g., metaverse to real-world) using systems and methods of the present disclosures.

Disclosed herein is a technical solution to context-specific and/or persona-specific communication in the metaverse, by utilizing persona-centric communication via virtual directory numbers and customizable reachability rule sets. In various embodiments, users set customizable communication rules for specific avatars and/or specific virtual spaces to ensure the desired communications are being received and the undesired communications are being blocked, based upon the context (e.g., virtual space and/or persona) of the user's engagements. Accordingly, a user may experience enhanced efficiency, satisfaction, and overall user experience in the metaverse relative to typical systems and methods for communicating in the metaverse.

Disclosed herein is a virtual reality system (e.g., a metaverse environment or the like) where users can create a virtual identity known as an avatar. This avatar can then visit the metaverse and perform various activities, such as play games, explore, or even visit businesses in a similar manner to the real world. Users can create multiple avatars and visit multiple virtual spaces within one or more metaverses. Accordingly, it is desirable to create a system that efficiently and effectively manages communications between and amongst various avatars and various virtual spaces.

Like in the real world, the avatars are typically driven by real people (e.g., via a user device or the like), and though a single person can potentially use multiple avatars, they can only deal with so many interactions at a time. Disclosed herein is a method of virtual communication management, which allows users to visit different virtual spaces and/or use different avatars, and create customizable reachability rules utilizing virtual directory numbers to intelligently manage communications. Instead of receiving all communications directed at the user and wasting their time sorting through which communications are relevant for the user's present activities, a virtual directory number associated with customizable communication rules can be generated to ensure the user only receives desired communications depending on the avatar the user is using and/or the location (e.g., virtual space) of the avatar.

A method for virtual reality (VR) communication can include creating, via one or more processors, multiple virtual spaces within one or more metaverses. The method can further include generating, via the one or more processors, an avatar-specific interface within the one or more metaverses. The method can further include generating, via the one or more processors, a list of reachability options. The method can further include, responsive to receiving a selection from the list of reachability options, applying, via the one or more processors, a set of communication rules for a first avatar. The method can further include managing, via the one or more processors, connectivity with the first avatar across virtual and real-world environments based upon the selection from the list of reachability options.

These and other embodiments may optionally include one or more of the following features. The avatar-specific interface can include an engageable interface whereby the list of reachability options is selected. The avatar-specific interface can include a likeness of the first avatar. The step of managing connectivity with the first avatar can include blocking an incoming notification for the first avatar of a first user and allowing the incoming notification for a second avatar of the first user.

The set of communication rules can define which avatars block incoming notifications. The set of communication rules can designate one or more virtual spaces of the multiple virtual spaces within the one or more metaverses that allow the first avatar to receive incoming notifications. The set of communication rules can define a first plurality of users that can contact the first avatar and the set of communication rules defines a second plurality of users that can contact a second avatar.

In another aspect, the subj ect matter may be embodied in a virtual reality system. The virtual reality system can include one or more VR servers configured to create multiple virtual spaces within one or more metaverses, a virtual communication server in communication with the one or more VR servers and configured to communicate with a plurality of user devices, and an avatar library in communication with each of the one or more VR servers and the virtual communication server. The avatar library can comprise a plurality of avatars. At least one of the one or more VR servers and the virtual communication server is configured to receive a first avatar request, generate a first avatar for a first user within the one or more metaverses based upon the first avatar request, assign a first virtual directory number to the first avatar, apply a first set of communication rules for the first avatar, and manage communication notifications for the first avatar within the one or more metaverses based on the first set of communication rules.

These and other embodiments may optionally include one or more of the following features. The first avatar request can be received from the first user. The first avatar request can be generated in response to the first user entering a first metaverse of the one or more metaverses. The step of managing communication notifications for the first avatar within the one or more metaverses based on the first set of communication rules can include blocking a second user within the one or more metaverses from viewing a communication between the first user and a third user.

The one or more VR servers and/or the virtual communication server can be further configured to receive a second avatar request, generate a second avatar for the first user within the one or more metaverses based upon the second avatar request, the second avatar is different from the first avatar, assign a second virtual directory number to the second avatar, apply a second set of communication rules for the second avatar, and manage communication notifications for the second avatar within the one or more metaverses based on the second set of communication rules. The second virtual directory number can be different from the first virtual directory number. The first set of communication rules is associated with a first virtual space within the one or more metaverses and the second set of communication rules is associated with a second virtual space within the one or more metaverses.

The first virtual directory number can be associated with a first virtual space within the one or more metaverses, and the managing communication notifications for the first avatar within the one or more metaverses based on the first set of communication rules includes blocking an incoming notification when the first avatar is outside of the first virtual space. The step of managing communication notifications for the first avatar within the one or more metaverses based on the first set of communication rules can include blocking an incoming notification for the first avatar of the first user and allowing the incoming notification for a second avatar of the first user.

In another aspect, the subject matter may be embodied in a method for screening a communication within one or more metaverses, wherein the one or more metaverses includes multiple virtual spaces, and each of the multiple virtual spaces is configured to permit a plurality of avatars to simultaneously interact with each other inside of at least one of the multiple virtual spaces. The method includes the steps of using at least one of one or more VR servers, a virtual communication server, or one or more user operating devices, to create the multiple virtual spaces within the one or more metaverses, receiving a first avatar request, generating a first avatar for a first user within the one or more metaverses based upon the first avatar request, assigning a first virtual directory number to the first avatar, applying a first set of communication rules for the first avatar, and managing communication notifications for the first avatar within the one or more metaverses based on the first set of communication rules.

These and other embodiments may optionally include one or more of the following features. The first set of communication rules can define a plurality of avatars from which to block incoming notifications. The first set of communication rules can designate one or more virtual spaces of the multiple virtual spaces within the one or more metaverses that allow the first avatar to receive incoming notifications.

The method can further include the step of blocking an incoming communication from a second user in response to (i) the first avatar being located in a first virtual space, and/or (ii) the first user operating as the first avatar. The method can further include the step of displaying the incoming communication from the second user in response to (i) the first avatar being located in a second virtual space, and/or (ii) the first user operating as a second avatar.

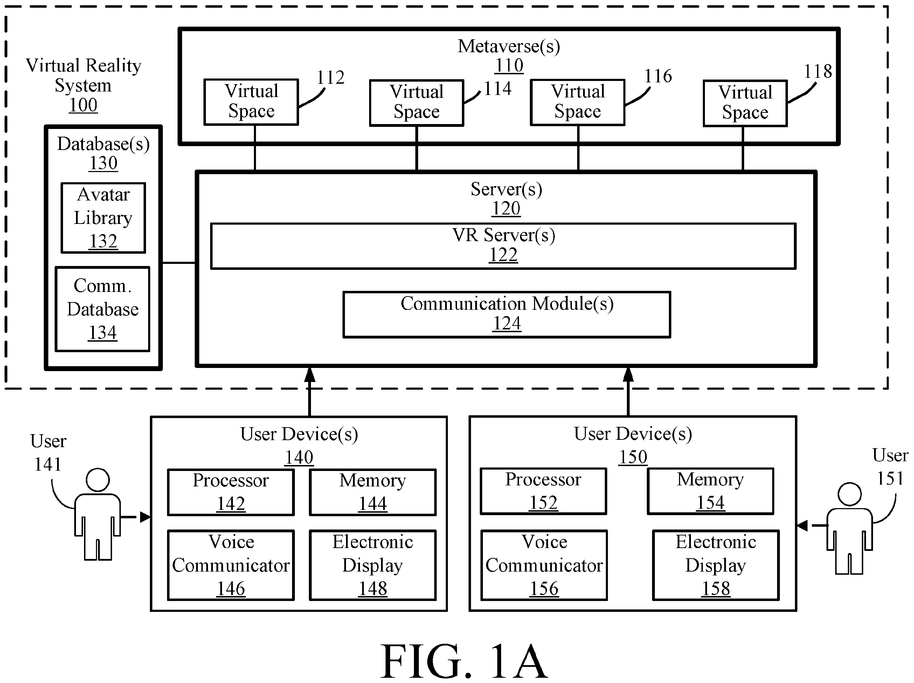

Referring now to FIG. 1A, a schematic view of a virtual reality ("VR") system 100 is illustrated, in accordance with various embodiments. The VR system 100 comprises one or more metaverses 110, one or more servers 120, and one or more databases 130. The VR system 100 is configured to communicate with various user devices. For example, the one or more servers 120 are configured for electronic communication (e.g., wired, wireless, network-based, or the like) with the user device 140 and the user device 150. In this regard, a user 141 can enter the one or more metaverses 110 via the user device 140 through the one or more servers 120 as described further herein. Similarly, a user 151 can enter the one or more metaverses 110 via the user device 150 and through the one or more servers 120. In various embodiments, the one or more databases 130 includes an avatar library 132, a communication database 134 (e.g., to store data associated with communication preferences), and/or any other databases for storing data associated with the one or more metaverses 110 and/or a respective avatar. In this regard, the avatar library can include one or more avatars for each user of the VR system 100. For example, a user 141 can choose from and/or customize, one or more avatars and store the one or more avatars in the avatar library 132, in accordance with various embodiments.

In various embodiments, the one or more servers 120 includes one or more VR servers 122 and one or more virtual communication modules 124. In this regard, the one or more VR servers 122 are configured to create multiple virtual spaces (e.g., virtual spaces 112, 114, 116, 118, or the like) within one or more metaverses 110. In various embodiments, the virtual spaces 112, 114, 116, and/or 118 can include a virtual store, a virtual service center, a gaming world, a virtual conference, a virtual world, or the like. The present disclosure is not limited in this regard. The one or more virtual communication modules 124 can be in communication with the one or more VR servers 122, or each of the one or more virtual communication modules 124 can be in direct communication with an associated, or corresponding, virtual space 112, 114, 116, 118. The present disclosure is not limited in this regard. The one or more virtual communication modules 124 is configured to communicate with a plurality of user devices (e.g., in accordance with the user device 140, the user device 150, or the like). In various embodiments, each of the one or more user devices 140 is associated with a user (e.g., user 141, user 151, or the like). In various embodiments, a user device (e.g., user device 140, user device 150, or the like) can be associated with multiple users. In this regard, a user 141 can login to an account, or associated user profile, via the user device (e.g., user device 140, user device 150, or the like) prior to entering the one or more metaverses 110, and in response to logging in, the user device (e.g., user device 140, user device 150, or the like) is associated with the user 141 while the user 141 is in the one or more metaverses 110. As described further herein, the one or more virtual communication modules 124 is configured to facilitate communications between each user (e.g., user 141, user 151, etc.) amongst and between the various virtual spaces 112, 114, 116, 118 and further can facilitate communications between a user in a virtual space and the real world, as described further herein.

In various embodiments, the avatar library 132 in the one or more databases 130 is in electronic communication with each of the one or more servers 120. The avatar library 132 comprises a plurality of avatars. For example, the avatar library 132 can include a plurality of avatars for a user (e.g., user 141), and the one or more databases 130 can include an avatar library 132 for each user, in accordance with various embodiments. However, the present disclosure is not limited in this regard. For example, the avatar library 132 can be a database for all users, a set of users, or the like, in accordance with various embodiments.

In various embodiments, the one or more communication databases134 in the one or more databases 130 is in electronic communication with each of the one or more servers 120. The one or more communication databases134 includes communication preferences associated with one or more avatars. For example, the one or more communication databases 134 can include communication preferences for each avatar, in accordance with various embodiments. However, the present disclosure is not limited in this regard. For example, the communication database(s) 134 can be a database for all users, a set of users, or the like, in accordance with various embodiments.

In various embodiments, the user device 140 includes one or more processors 142, a memory 144, a voice communicator 146, and an electronic display 148. Similarly, the user device 150 includes one or more processors 152, a memory 154, a voice communicator 156, and an electronic display 158.

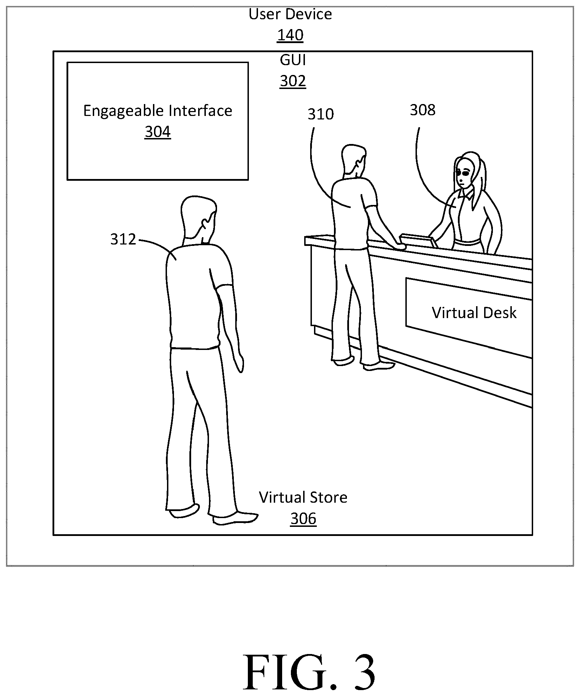

In various embodiments, the electronic display 148, 158 can comprise any type of display device for displaying a virtual space (e.g., virtual spaces 112, 114, 116, 118, or the like) within the one or more metaverses 110. For example, the electronic display 148, 158 can comprise a monitor, smart glasses, a tablet, a VR headset, or the like. The present disclosure is not limited in this regard. In various embodiments, the electronic display 148, 158 is configured to display a graphical user interface (GUI) (e.g., prior to entering the one or more metaverses). In various embodiments, after entering the one or more metaverses, the GUI (e.g., GUI 302 as shown in FIG. 3) is configured to display the one or more metaverses 110, in accordance with various embodiments. In various embodiments, the GUI is in operable communication with the one or more servers 120. In this regard, a user 141 can provide various inputs to the one or more servers 120 through the GUI prior to entering, or while within, the one or more metaverses 110.

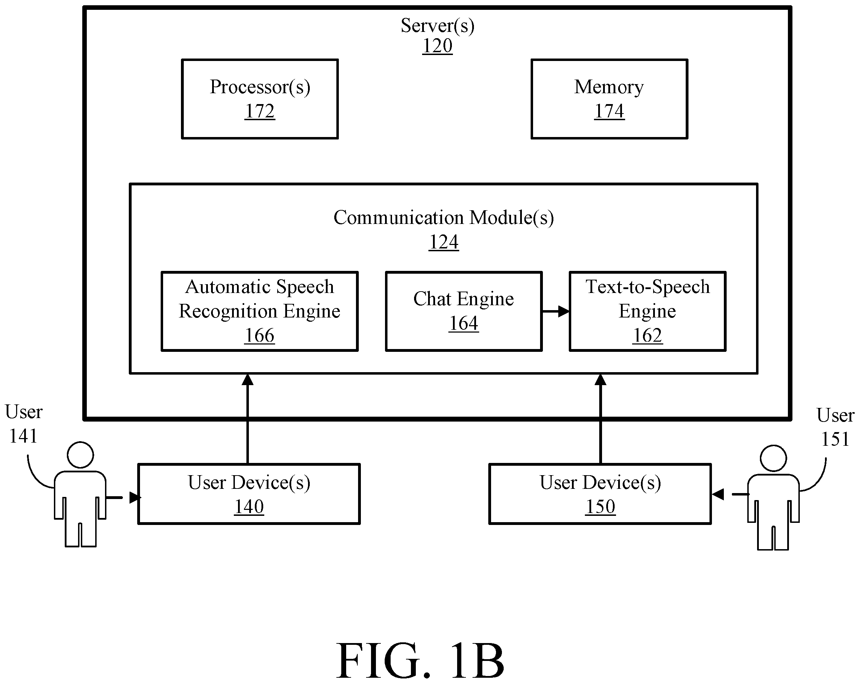

With reference now to FIG. 1B, a schematic view of the one or more servers 120 from FIG. 1A interacting with the user device 140 and the user device 150 is illustrated, in accordance with various embodiments. With combined reference to FIG. 1A and FIG. 1B, the user 141 can interact with the user 151 through the one or more communication modules 124 of the one or more servers 120. In various embodiments, the one or more communication modules 124 can comprise a computing device that is programmed to manage communications and/or communication notifications between users (and/or avatars) based on a set of configurable communication rules, as described further herein.

The one or more communication modules 124 as shown can be a part of the one or more VR servers 122 from FIG. 1A, in accordance with various embodiments. In various embodiments, the user 141 and/or the user 151 can communicate with the one or more communication modules 124 through an automatic speech recognition engine (ASR) 166. For example, voice communicator 146 of the user device 140 from FIG. 1A can be converted to text by the automatic speech recognition (ASR) engine 166. Although illustrated as being a part of the one or more servers 120, the ASR engine 166 can be a separate device from the one or more servers 120 and still be within the scope of this disclosure. Text generated by the ASR engine 166 can be communicated by the one or more VR servers 122 or the like to chat engine 164 (e.g., through the communication module(s)), which communicates the text to the user device 150. In various embodiments, the initial interactions between the user 141 and the communications module 124 may not be transmitted to the user device 150 until a user 151 has either (1) assumed a predetermined avatar (i.e., an avatar with permissions selected to receive communications from the user 141) or (2) an avatar associated with the user 151 has reached a redetermined a virtual space (i.e., once the avatar is no longer in a virtual space that is restricted from receiving communications from the user 141), as described further herein. However, a user device 150 can be configured to receive information immediately upon the user 141 interacting with the communications module 124 depending on the communication rules set by the user 151, in accordance with various embodiments.

In various embodiments, the chat engine 164 is configured to transmit text received and/or generated from the communications module 124 to the user device 150. In this regard, the chat engine 164 can be configured to generate chat room, or chat space specific to, and associated with, a user 141, in accordance with various embodiments. In various embodiments, the chat room or chat space can remain with a user 141 until the receiving party, for example a user 151, has either (1) assumed a predetermined avatar (i.e., an avatar with permissions selected to receive communications from the user 141) or (2) an avatar associated with the user 151 has reached a redetermined a virtual space (i.e., once the avatar is no longer in a virtual space that is restricted from receiving communications from the user 141). In this regard, any communications between the user 141 and the communications module 124 can be provided to the user 151 upon the user 151, or the avatar associated with the user 151, meeting a predetermined condition based on a set of configurable communication rules set by the user 151. It should be understood that any reference to a user can include communications with a real person outside of the metaverse (e.g., a metaverse user can make a call to a real person not associated with the virtual world). Accordingly, a user 141 can communicate with other virtual universe users using the VR system 100 or can communicate with people outside of the virtual universe, for example where the VR system 100 sends a communication (e.g., a text, a phone call, and email, etc.) to a natural person.

In various embodiments, the one or more servers 120 includes a text-to-speech engine (TTS) 162. The TTS engine 162 can be configured to convert text generated by a user device (e.g., user device 140 or user device 150) via chat engine 164 into speech and transmits the speech to the communications module 124, which then transmits the speech to the designated receiving party (e.g., the other of the user device 140 or the user device 150) where users can hear the speech. In this regard, an audio message can be sent to a designated receiving party (e.g., a user or a real person outside of the metaverse) using text generated by the sender's user device.

In various embodiments, the one or more servers 120 can comprise one or more processors 172. The one or more servers 120 can be integrated into a computer system (e.g., in processor and/or memory). In various embodiments, the one or more servers 120 can be configured as a central network element or hub to various systems and components of the VR system 100 from FIG. 1A. In various embodiments, the one or more servers 120 may comprise a processor 172. In various embodiments, one or more servers 120 be implemented as a single processor 172 and associated memory 174. In various embodiments, the one or more servers 120 may be implemented as one or more processors 172 and/or memories 174 (e.g., a main processor and local processors for various components, a decentralized network of main processors, or the like). The one or more servers 120 may comprise one or more processors 172 configured to implement various logical operations in response to execution of instructions, for example, instructions stored on a non-transitory, tangible, computer-readable medium (e.g., memory 174) configured to communicate with the user device 140 and/or the user device 150, in accordance with various embodiments.

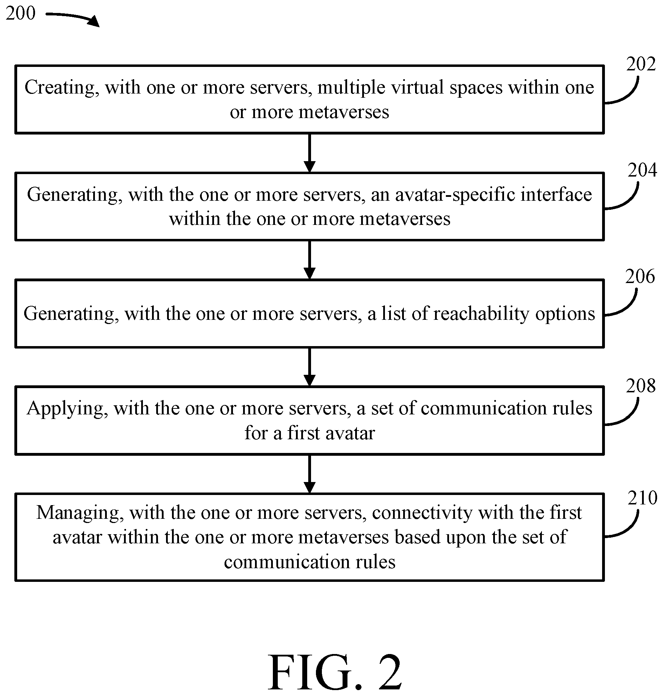

Referring now to FIG. 2, a flowchart for a method 200 is illustrated, in accordance with various embodiments. The method 200 can be a method for virtual reality communication. For ease of description, the method 200 is described below with reference to FIG. 1A and FIG. 3. The method 200 of the present disclosure, however, is not limited to use of the exemplary VR system 100 of FIG. 1A or the GUI 302 of FIG. 3.

In step 202, the method 200 includes creating, with the one or more VR servers 120, a plurality of virtual spaces (e.g., virtual spaces 112, 114, 116, and/or 118) within one or more metaverses 110.

In step 204, the method 200 includes generating, with the one or more VR servers 120, an avatar-specific interface within the one or more metaverses 110. For example, with momentary reference to FIG. 3, a user, and more specifically the user's avatar 310, can enter a first virtual space, such as a virtual space 112 from FIG. 1A. In the illustrated embodiment of FIG. 3, the virtual space can be a virtual store 306 as an example only, though the virtual space could be any suitable virtual space and is not limited in this regard. A user 141 can view the virtual store 306 through a graphical user interface (GUI) 302. In the store, a user 141 can view through the GUI 302 one or more avatars and or structures (e.g., an agent avatar 308, one or more customer avatars 310, and in various embodiments the user's avatar 312). Accordingly, a likeness of the user's avatar 312 can be displayed on the GUI 302. In various embodiments, the avatar 312 is controllable by a user 141 through a user device 140 as described previously herein (e.g., via a virtual reality headset, virtual reality goggles, or the like).

In step 206, the method 200 includes generating, with the one or more VR servers 120, a list of reachability options (e.g., engageable interface 304). With momentary reference again to FIG. 3, the user 141 may further be able to see through the GUI 302 an engageable interface 304. An "engageable interface" (e.g., engageable interface 304) as referred to herein can include a selectable notification (e.g., a selectable menu with a list of reachability options, a selectable message such as a message from another user, a selectable menu with customization options for the avatar, or options to select between different avatars, or the like), or any other engageable interface configured to facilitate a reachability preference request in accordance with step 206 of method 200. Accordingly, the user can select from the list of reachability options via the engageable interface 304 to cause the one or more VR servers 120 to apply a set of communication rules for an avatar, wherein the set of communication rules at least one of (1) defines which avatars of the user 141 block incoming notifications, and from whom, and (2) designates one or more virtual spaces of the multiple virtual spaces within the one or more metaverses that allows an avatar of the user 141 to receive communications, and from whom. In this regard, in response to a user 141 engaging with the engageable interface 304, the user 141 can select from the list of reachability options. This selection from the list of reachability options can be received by the one or more VR servers 120 and saved in memory (e.g., communication database 134 of FIG. 1A). The engageable interface 304 can appear in close proximity to the primary avatar 312.

In step 208, the method 200 includes applying, with the one or more VR servers 120, a set of communication rules for the avatar 312. For example, responsive to receiving the selection from the user 141, the one or more VR servers 120 can save communication preferences for that particular avatar in the communication database, such as communication database 134 of FIG. 1A. In this manner, a single user can set unique communication preferences for different avatars. For example, based upon a user selection, the one or more VR servers 120 can save a first avatar that has communication preferences set so that the one or more VR servers 120 blocks communications from a second user (e.g., user 151) or so that the one or more VR servers 120 blocks communications from a second user (e.g., user 151) only when the first avatar is in predetermined restricted virtual areas (e.g., the first avatar may be able to receive communications from the second user when the first avatar is in a first virtual space 112, but may block communication from the second user when the first avatar is in a second virtual space 114). Based upon a user selection, the one or more VR servers 120 can save a second avatar with different communication rules from the first avatar. Accordingly, the user can assume different personas (i.e., avatars) depending on the desired communication preferences, or depending on where the user is going to be within the one or more metaverses 110.

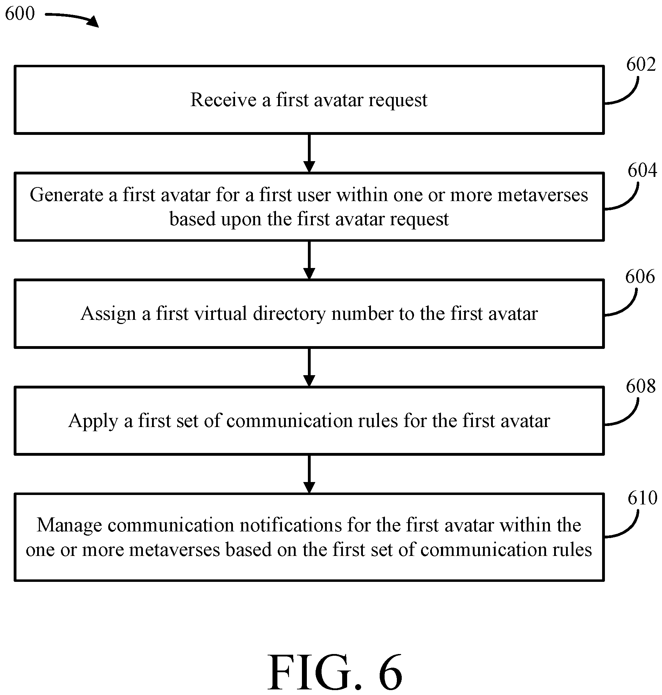

In step 210, the method 200 includes managing, with the one or more VR servers 120, connectivity within the one or more metaverses 110 based upon the set of communication rules. For example, the one or more VR servers 120 can receive a communication request from a user (e.g., user 151) intended for another user or another user's avatar (e.g., user 141 or the avatar of user 141). The one or more VR servers 120 can check whether the communication rules for the avatar being used by user 141, for example as saved in the one or more communication databases 134, allows communications from the user 151. In response to the communication rules for the avatar being used by user 141 allowing communications from user 151, the one or more VR servers 120 can direct the communication to be sent to user 141. In various embodiments, the received message can be displayed by the GUI 302, for example with the engageable interface 304 or another portion of the GUI 302, in accordance with various embodiments. In response to the communication rules for the avatar being used by user 141 restricting communications from user 151, the one or more VR servers 120 can block the communication from being sent and/or displayed to user 141. If the communication rules restrict communications from user 151 while the avatar of user 141 is in a certain virtual space, the one or more VR servers 120 can hold the message from user 151 and send the message to user 141 only after the avatar of user 141 enters a virtual space where the messages from user 151 are permitted. In various embodiments, the method 200 utilizes a virtual directory number as described herein, for example with respect to FIG. 6, for managing connectivity and/or communication.

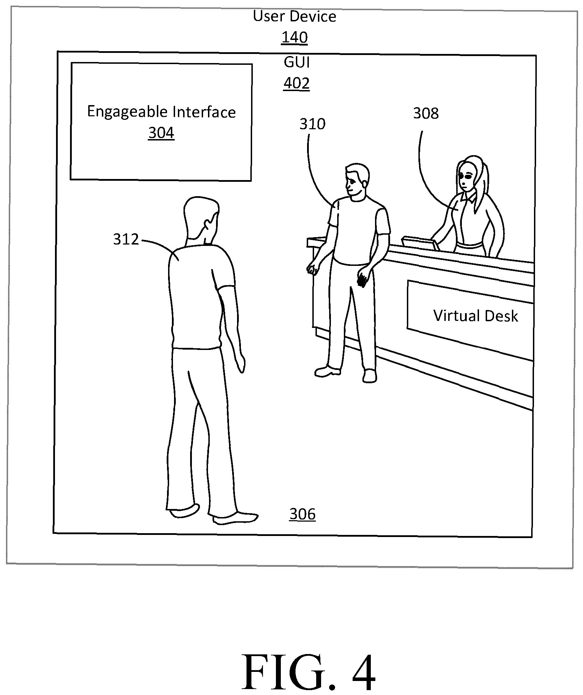

With reference to FIG. 4, a GUI 402 similar to the GUI 302 of FIG. 3 is illustrated, but with the avatar 310 modified by the one or more VR servers 120 so as to appear to not be engaged in communication with avatar 308. In various embodiments, in response to the communication rules associated with avatar 310 set to block avatar 312 from viewing communications of avatar 310, the VR system 100 can be configured modify the GUI 402 as viewed by the user of avatar 312 to appear as if the avatar 310 is not in communication with designated avatars (e.g., avatar 308) even when the avatar 310 is in communication with a designated avatar 308. For example, as illustrated in FIG. 3, avatar 310 can be engaged in communication with avatar 308. However, the one or more VR servers 120 can be configured to modify the GUI 402 as viewed by the user associated with avatar 312 so that it appears as if avatar 310 is not engaged in communication with avatar 308, as illustrated in FIG. 4. Although illustrated with the avatar 310 turned away from avatar 308, the GUI 402 can be modified in a variety of ways to block the user associated with the avatar 312 from viewing the communication. For example, one or both of avatar 310 and avatar 308 can be hidden (i.e., omitted) from the GUI 402 when avatar 310 is engaged in communication with avatar 308. At the same time the one or more VR servers 120 is hiding the appearance of communication from the GUI of the user of avatar 312, the one or more VR servers 120 can generate a GUI for the user of avatar 310 or avatar 308 so as to appear as if the avatars 308, 310 are engaged in conversation, for example as illustrated in FIG. 3 but from the view of the respective avatars 308, 310.

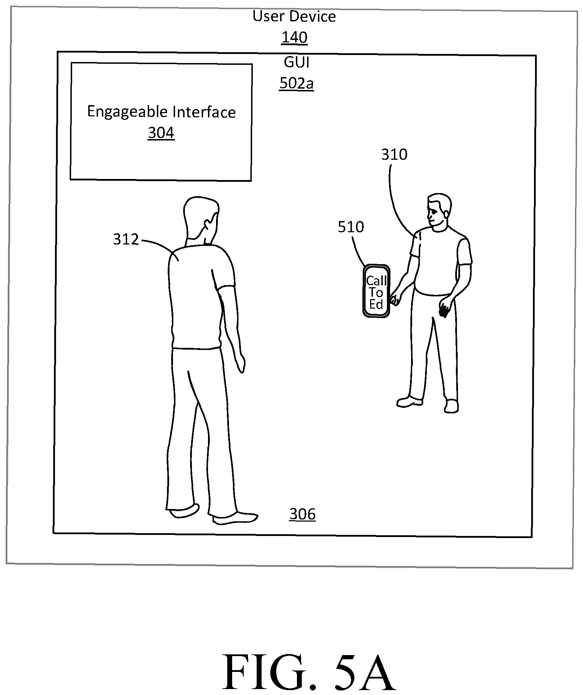

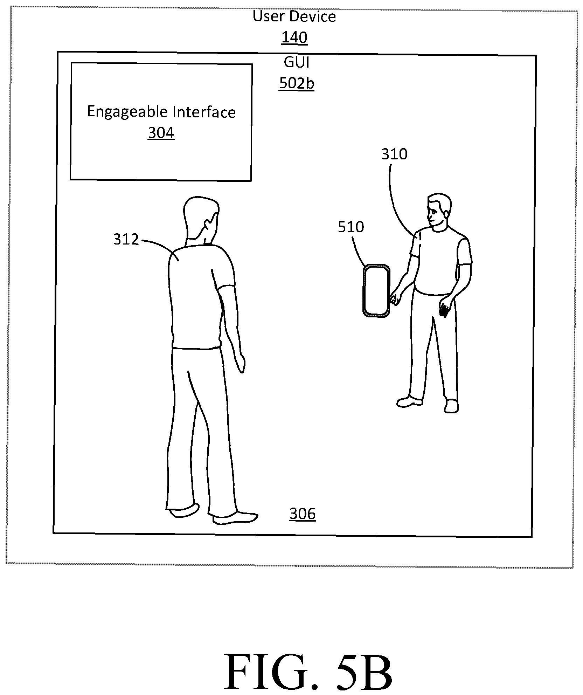

With reference to FIG. 5A and FIG. 5B, a user controlling an avatar 312 may be able to see through a GUI 502a a virtual communication device 510 associated with an avatar 310 (e.g., a rendering of a cell phone, a tablet, a computer, a monitor, a display screen, etc.). As illustrated in FIG. 5A, communications between the avatar 310 and another user can be displayed on the virtual communication device 510. In response to the set of communication rules indicating to block communications by avatar 310 (or the user associated with avatar 310) from the avatar 312 (or the user associated with the avatar 312), the one or more VR services 120 can be configured to modify the GUI 502b of the user associated with the avatar 312 to block the communications displayed by the virtual communication device 510, as illustrated in FIG. 5B. In FIG. 5B, the communications are omitted from the virtual communication device 510; however, in various embodiments the virtual communication device 510 itself can be entirely hidden (e.g., omitted) from the GUI 502b so as to hide communications of avatar 310 from avatar 312 (and the user of the avatar 312).

Referring now to FIG. 6, a flowchart for a method 600 is illustrated, in accordance with various embodiments. The method 600 can be a method for virtual reality communication. The method 600 can be a method for managing communications in a metaverse. For ease of description, the method 600 is described below with reference to FIG. 1A and FIG. 3. The method 600 of the present disclosure, however, is not limited to use of the exemplary VR system 100 of FIG. 1A or the GUI 302 of FIG. 3.

In step 602, the method 600 includes receiving a first avatar request. For example, the one or more VR servers 120 can receive a first avatar request from a first user (e.g., user 141). The first avatar request can be made by the user 141 making an avatar selection via the engageable interface 304 of FIG. 3. The user 141 can select, using the user device 140, an avatar from the avatar library 132. For example, a user 141 may have multiple avatars saved in the avatar library 132 for different applications. The avatar request can be made automatically in response to the user 141 powering ON the virtual reality system and/or entering the one or more metaverses 110 (e.g., a default avatar and/or the last used avatar).

In step 604, the method 600 includes generating a first avatar for a first user within the one or more metaverses based upon the first avatar request. For example, the one or more VR servers 120 can generate an avatar (e.g., avatar 312 of FIG. 3) based upon the first avatar request made in step 602. The avatar 312 can be represented virtually using 3D graphics on the GUI 302.

In step 606, the method 600 includes assigning a first virtual directory number ("virtual DN") to the first avatar. For example, the one or more VR servers 120 can assign a first virtual DN to the first avatar whereby the avatar (and the first user 141) can receive communications from other users or other people outside of the one or more metaverses 110. As used herein a "virtual directory number" is a unique digital designation used to direct communication to the appropriate virtual space or avatar. Stated differently, the virtual DN is associated with the avatar, as opposed to the user. In the virtual realm, the user's persona/avatar becomes the user's communication hub, and the virtual designation number connects to the avatar, and not necessarily the person/user. In this manner, the one or more communication modules 124 can operate based upon persona-centric virtual communication through the virtual DNs. Accordingly, the VR system 100 can assign a first avatar associated with a first user 141 a first virtual DN, and can assign a second avatar associated with the first user 141 a second virtual DN. Virtual avatars or personas within virtual reality can represent different applications or different virtual spaces (e.g., "the office person", "the gamer," the "work-from-home" professionals, or even "anonymous" personas), and each virtual avatar can benefit from its own unique virtual DN. In various embodiments, these virtual DNs empower different virtual avatars to initiate interactions within specific virtual environments. For example, a first user 141 (e.g., named Doug) can have a first avatar named "Doug" that has a first virtual DN in a first virtual spaced (e.g., an office space) and a second avatar named "Luke Cyberwalker" that has a second virtual DN in a second virtual space (e.g., a virtual commerce space or a virtual gaming space). Accordingly, the first user 141 can share the first virtual DN with a first set of users (e.g., associated with a first virtual space) and can share the second virtual DN with a second set of users (e.g., associated with a second virtual space).

In step 608, the method 600 includes applying a first set of communication rules for the first avatar. For example, responsive to receiving a selection from the user 141 (as described with respect to method 200 of FIG. 2), the one or more VR servers 120 can save communication preferences for the first avatar in the communication database, such as communication database 134 of FIG. 1A. This first set of communication rules can be associated with the first virtual DN. Stated differently, the one or more communication modules 124 of FIG. 1B can apply the first set of communication rules to the first virtual DN. In this manner, when a communication is received by the one or more communication modules 124 using the first virtual DN, the one or more communication modules 124 will apply the first set of communication rules to the incoming communication.

In various embodiments, each avatar is assigned its own virtual DN. In this manner, communication rules can be associated with the virtual DN of the avatar.

In step 610, the method 600 includes managing communication notifications for the first avatar within the one or more metaverses based on the first set of communication rules. For example, the one or more VR servers 120 can manage connectivity within the one or more metaverses 110 based upon the first set of communication rules. In various embodiments, step 610 is similar to step 210 of FIG 2. In various embodiments, the virtual DN serves as both a means for directing communications, as well as for organizing the communication rules (i.e., different communication rules can be applied to different virtual DNs).

In various embodiments, the virtual DNs are stored in a communication databased, for example the communication database 134 of FIG. 1A. Moreover, a set of communication rules can be stored in connection with the virtual DNs, such that responsive to receiving a communication, the one or more VR servers 120 identifies the communication rules associated with the incoming communication using the virtual DN. For example, the communication rules can be stored in a lookup table or the like that is organized by virtual DN.

In various embodiments, the method 600 can be repeated for a second avatar request, wherein the one or more VR servers 120 manage communication notifications for the second avatar based upon a second set of communication rules different from the first set of communication rules. For example, the method 600 can further include receiving a second avatar request (e.g., the user 141 switches from the first avatar to the second avatar). The method 600 can further include generating a second avatar for the first user within the one or more metaverses based upon the second avatar request, wherein the second avatar is different from the first avatar. The method 600 can further include assigning a second virtual directory number to the second avatar. The second virtual directory number is different from the first directory number. The method 600 can further include applying a second set of communication rules for the second avatar, wherein the second set of communication rules is different from the first set of communication rules. The method 600 can further include managing communication notifications for the second avatar within the one or more metaverses based on the second set of communication rules.

For example, the first avatar of the first user can be for a first virtual space (e.g., a virtual office space) and the second avatar of the second user can be for a second virtual space (e.g., a virtual gaming space). Accordingly, the first virtual directory number can be associated with the first virtual space (e.g., the first virtual directory number may only allow communications when the first avatar is in the first virtual space) and the second virtual directory number can be associated with the second virtual space (e.g., the second virtual directory number may only allow communications when the second avatar is in the second virtual space). In various embodiments, step 610 can include blocking an incoming notification for the first avatar of the first user and allowing the incoming notification for a second avatar of the first user.

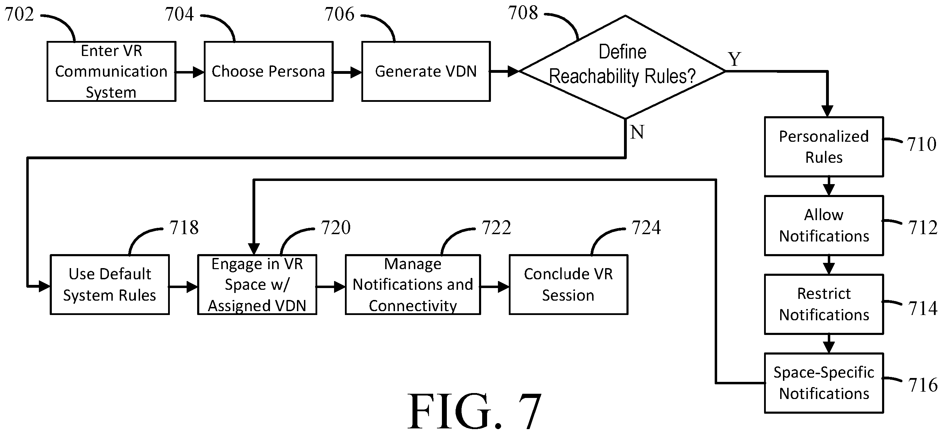

Referring now to FIG. 7, a flowchart for a method 700 is illustrated, in accordance with various embodiments. The method 700 can be a method for virtual reality communication. The method 700 can be a method for managing communications in a metaverse. For ease of description, the method 700 is described below with reference to FIG. 1A and FIG. 3. The method 700 of the present disclosure, however, is not limited to use of the exemplary VR system 100 of FIG. 1A or the GUI 302 of FIG. 3.

In step 702, the method 700 includes a user entering the VR system 100. For example, a user 141 can initiate entry into a preferred virtual space 112, 114, 116, or 118 or metaverse 110.

In step 704, the method 700 includes the user choosing a persona. For example, the user 141 can select an avatar 312 from the avatar library 132.

In step 706, the method 700 includes generating a virtual DN. For example, the one or more servers 120 can assign a unique virtual DN to the selected avatar. This virtual DN can be associated with multiple avatars and/or specific virtual spaces 112, 114, 116, or 118. This virtual DN can be shared with other users as desired.

In step 708, the method 700 includes defining reachability rules. For example, the one or more servers 120 can determine whether the user wants to set personalized reachability rules. For example, the VR system 100 can prompt the user 141 to make a communications selection via the engageable interface 304, or the like. In response to the user 141 making a selection indicating that the user 141 would like to define custom reachability rules the method 700 can proceed to step 710; otherwise, the method 700 can proceed to step 718 where the VR system 100 uses predetermined default system rules for avatar reachability.

In step 710, the method 700 includes defining personalized rules. For example, the user 141 can define which avatars can contact the user 141 and under what circumstances (e.g., time of day, in which virtual spaces, etc.).

In step 712, the method 700 includes defining notification preferences. For example, the user 141 can define which avatars can send and/or receive notifications, and from whom.

In step 714, the method 700 includes defining notification preferences. For example, the user 141 can define which avatars block incoming notifications, and from whom.

In step 716, the method 700 includes defining space-specific notifications. For example, the user 141 can designate virtual spaces that allow notifications for certain avatars. For example, the user 141 can designate a first avatar to allow incoming communication notifications in a first virtual space 112 and can designate a second avatar to block incoming communication notifications in the first virtual space 112.

In step 720, the method 700 includes engaging in a virtual space with the assigned virtual DN. For example, the VR system 100 can utilize the designated virtual DN to manage communications for the user 141. The VR system 100 can direct interactions (e.g., communications) based on the virtual DN to the appropriate virtual space or avatar.

In step 722, the method 700 includes managing notifications and connectivity. For example, the VR system 100 can manage notifications based on the set communication rules and the activity of the avatar. In various embodiments, the VR system 100 can manage continuous communication with the relevant avatar and/or the relevant virtual space based on the communication rules and the activity of the avatar.

In step 724, the VR system 100 can conclude the virtual reality session, for example when the user ends the virtual reality experience.

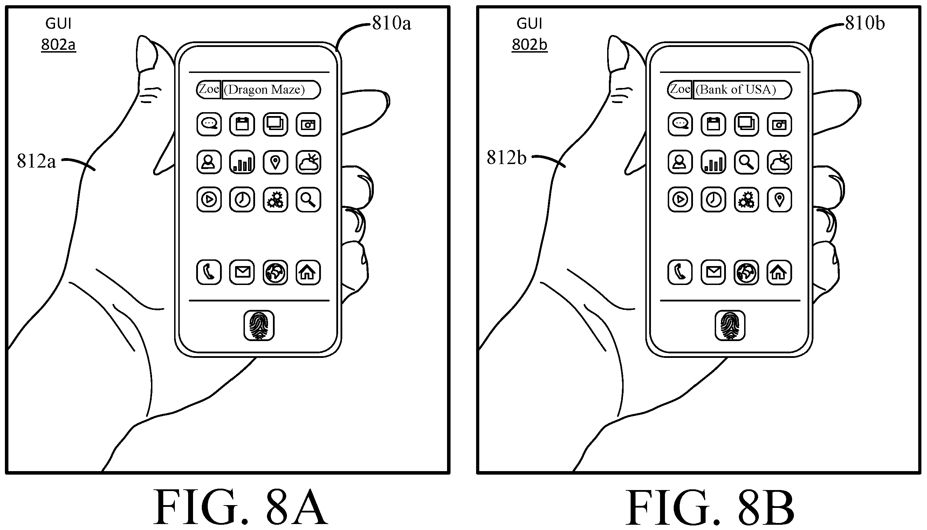

Referring now to FIG. 8A and FIG. 8B, example virtual notifications for a user in a first virtual space (FIG. 8A) and a second virtual space (FIG. 8B) are illustrated, respectively, in accordance with various embodiments. In FIG. 8A a GUI 802a for a user (e.g., user 141) shows the user's avatar 812a and a communication device 810a (e.g., a cell phone) of the user's avatar 812a. In the illustrated example of FIG. 8A, the communication device 810a is for a user (e.g., user 141) named "Zoe" when the user is in a first virtual space (e.g., virtual space 112) called "Dragon Maze." In the illustrated example of FIG. 8B, the communication device 810b is for a user (e.g., user 141) named "Zoe" when the user is in a second virtual space (e.g., virtual space 114) called "Bank of USA." Accordingly, the VR system 100 can be configured to display an avatar-specific GUI (e.g., GUI 802a and/or GUI 802b) based upon which virtual space the avatar is located. In various embodiments, avatar 812a and avatar 812b are different avatars. In various embodiments, avatar 812a and avatar 812b are the same avatar.

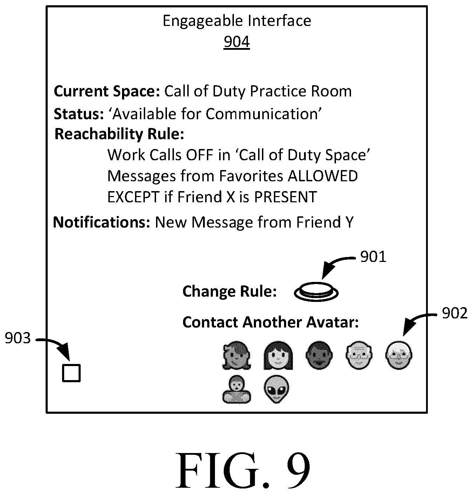

Referring now to FIG. 9, an engageable interface 904 is illustrated, in accordance with various embodiments. Engageable interface 304 can be similar to engageable interface 904 in accordance with various embodiments. Engageable interface 904 can illustrate and/or display various conditions such as "current space," "status," "reachability rules," "notifications," etc. The current space can be the virtual space (e.g., virtual space 112 of FIG. 1A) that the avatar is currently located (e.g., virtual store, investment forum - blockchain desk, virtual gaming space, etc.). The status can indicate the availability for communication with the avatar (e.g., available for communication, unavailable, etc.). The status can change color (e.g., green for available and yellow or red for unavailable, etc.). The reachability rules can define various reachability rules associated with the location, particular users, etc. For example, the reachability rules can indicate that no work calls are allowed in a non-work space, among other reachability rules. Notifications can include new messages, missed calls, etc. A change rule toggle or button 901 can be displayed. The button 901 can be selected to change communication/reachability rules. A plurality of avatar icons 902 can be displayed whereby a user can select which avatar to contact. Each icon 902 can have a likeness of the avatar to readily indicate to the user which avatar is being selected for communication.

The engageable interface 904 can include additional information and/or buttons/toggles for indicating a variety of other conditions, availability, and/or indicators of the avatar. For example, the engageable interface 904 can include one or more toggles 903 to turn ON or OFF various conditions such as "focus mode: ON/OFF," "networking: ON/OFF," etc." The engageable interface 904 can further include a list of devices and their status (e.g., Headset: active, Watch: mute, etc.). The engageable interface 904 can be used to add another avatar to a communication room or party (e.g., a bridged connection). The engageable interface 904 can automatically update as messages are received, the avatar moves between different virtual spaces, and/or the user switches between avatars, among other factors.

Benefits, other advantages, and solutions to problems have been described herein regarding specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, Band C may be present in a single embodiment; for example, A and B, A and C, B and C, or A and B and C. Different cross-hatching is used throughout the figures to denote different parts but not necessarily to denote the same or different materials.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. No claim element herein is to be construed under the provisions of 35 U.S.C. 112(f) unless the element is expressly recited using the phrase "means for." As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, any of the above-described concepts can be used alone or in combination with any or all the other above-described concepts. Although various embodiments have been disclosed and described, one of ordinary skill in this art would recognize that certain modifications would come within the scope of this disclosure. Accordingly, the description is not intended to be exhaustive or to limit the principles described or illustrated herein to any precise form. Many modifications and variations are possible considering the above teaching.

## Claims

1. A virtual reality system comprising:
one or more virtual reality (VR) servers configured to create multiple virtual spaces within one or more metaverses;
a virtual communication server in communication with the one or more VR servers and configured to communicate with a plurality of user devices;
an avatar library in communication with each of the one or more VR servers and the virtual communication server, wherein the avatar library comprises a plurality of avatars, wherein at least one of the one or more VR servers and the virtual communication server is configured to:
receive a first avatar request;
generate a first avatar for a first user within the one or more metaverses based upon the first avatar request;
assign a first virtual directory number to the first avatar;
apply a first set of communication rules for the first avatar; and
manage communication notifications for the first avatar within the one or more metaverses based on the first set of communication rules.

2. The virtual reality system of claim 1, wherein the first avatar request is received from the first user or wherein the first avatar request is generated in response to the first user entering a first metaverse of the one or more metaverses.

3. The virtual reality system of claim 1 or claim 2, wherein the communication server is configured to manage communication notifications for the first avatar within the one or more metaverses based on the first set of communication rules by blocking a second user within the one or more metaverses from viewing a communication between the first user and a third user.

4. The virtual reality system of any of claims 1 to 3, wherein the at least one of the one or more VR servers and the virtual communication server is further configured to:
receive a second avatar request;
generate a second avatar for the first user within the one or more metaverses based upon the second avatar request, the second avatar is different from the first avatar;
assign a second virtual directory number to the second avatar;
apply a second set of communication rules for the second avatar; and
manage communication notifications for the second avatar within the one or more metaverses based on the second set of communication rules.

5. The virtual reality system of claim 4, wherein the first set of communication rules is associated with a first virtual space within the one or more metaverses and the second set of communication rules is associated with a second virtual space within the one or more metaverses.

6. The virtual reality system of any of claims 1 to 5, wherein the first virtual directory number is associated with a first virtual space within the one or more metaverses, and the communication server is configured to manage communication notifications for the first avatar within the one or more metaverses based on the first set of communication rules by blocking an incoming notification when the first avatar is outside of the first virtual space.

7. The virtual reality system of any of claims 1 to 6, wherein the communication server is configured to manage communication notifications for the first avatar within the one or more metaverses based on the first set of communication rules by blocking an incoming notification for the first avatar of the first user and allowing the incoming notification for a second avatar of the first user.

8. A method for screening a communication within one or more metaverses, wherein the one or more metaverses includes multiple virtual spaces, wherein each of the multiple virtual spaces is configured to permit a plurality of avatars to simultaneously interact with each other inside of at least one of the multiple virtual spaces, the method comprising steps of:
using at least one of one or more virtual reality (VR) servers, a virtual communication server, or one or more user operating devices, to create the multiple virtual spaces within the one or more metaverses;
receiving a first avatar request;
generating a first avatar for a first user within the one or more metaverses based upon the first avatar request;
assigning a first virtual directory number to the first avatar;
applying a first set of communication rules for the first avatar; and
managing communication notifications for the first avatar within the one or more metaverses based on the first set of communication rules.

9. The method of claim 8, wherein the first set of communication rules defines a plurality of avatars from which to block incoming notifications.

10. The method of claim 8 or claim 9, wherein the first set of communication rules designates one or more virtual spaces of the multiple virtual spaces within the one or more metaverses that allow the first avatar to receive incoming notifications.

11. The method of any of claims 8 to 10, further comprising the step of blocking an incoming communication from a second user in response to at least one of:
(i) the first avatar being located in a first virtual space; or
(ii) the first user operating as the first avatar.

12. The method of any of claims 8 to 11, further comprising the step of displaying the incoming communication from the second user in response to at least one of:
(i) the first avatar being located in a second virtual space; or
(ii) the first user operating as a second avatar.

13. A method for virtual reality (VR) communication, comprising:
creating, via one or more processors, multiple virtual spaces within one or more metaverses;
generating, via the one or more processors, an avatar-specific interface within the one or more metaverses;
generating, via the one or more processors, a list of reachability options;
responsive to receiving a selection from the list of reachability options, applying, via the
one or more processors, a set of communication rules for a first avatar; and managing, via the one or more processors, connectivity with the first avatar across virtual
and real-world environments based upon the selection from the list of reachability options.

14. The method of claim 13, wherein the avatar-specific interface comprises at least one of an engageable interface whereby the list of reachability options is selected and a likeness of the first avatar and/or wherein the set of communication rules defines which avatars block incoming notifications.

15. The method of claim 13 or claim 14, wherein the set of communication rules defines a first plurality of users that can contact the first avatar and the set of communication rules defines a second plurality of users that can contact a second avatar and/or wherein the managing connectivity with the first avatar includes blocking an incoming notification for the first avatar of a first user and allowing the incoming notification for a second avatar of the first user.
